# EUROPÄISCHE PATENTSCHRIFT

(11) **EP 0 622 557 B1**
(45) Veröffentlichungstag und Bekanntmachung des Hinweises auf die Patenterteilung: **05.06.1996**
(21) Anmeldenummer: 94102041.4
(22) Anmeldetag: 10.02.1994
(51) Int. Cl.: F16D 3/58

(54) **Drehelastische Wellenkupplung**
Flexible coupling
Accouplement élastique

(30) Priorität: 26.03.1993 DE 4309747
(43) Veröffentlichungstag der Anmeldung: 02.11.1994
(73) Patentinhaber: CENTA-ANTRIEBE KIRSCHEY GmbH, D-42781 Haan (DE)
(72) Erfinder: Kirschey, Gerhard, Dipl.-Ing., D-42329 Wuppertal (DE)
(74) Vertreter: Patentanwälte Ostriga & Sonnet

(56) Entgegenhaltungen:
- DE-C- 4 033 596
- DE-U- 9 304 498
- FR-A- 1 344 257
- GB-A- 1 021 379
- GB-A- 2 239 485
- US-A- 2 327 389

## Beschreibung

Die Erfindung bezieht sich auf eine drehelastische Wellenkupplung nach dem Oberbegriff des Anspruchs 1.

Eine solche Wellenkupplung, bei der die erwähnten elastischen Kupplungskörper in Gestalt strangförmiger zylindrischer Stäbe unter radialer Vorspannung zwischen Nabe und Kupplungsflansch-Ausnehmung eingesetzt sind, ist durch offenkundige Vorbenutzung bekannt. Der Innenumfang der Kupplungsausnehmung ist als regelmäßiges, vierseitiges Polygon gestaltet, ebenso, jedoch mit kleinerem Durchmesser, der Außenumfang der Nabe. Der Umfangsversatz zwischen Nabe und Kupplungsflansch-Ausnehmung beträgt - wegen der zu erhaltenden Symmetrie - bei diesem vierseitigen Polygons 45^{o,} damit sich die elastischen Kupplungskörper einerseits in den Ecken der Kupplungsflansch-Ausnehmung und andererseits an den Polygonflächen der Nabe abgestützten können. Die gummielastischen Kupplungskörper wirken im Betrieb der Kupplung, also bei Veränderung der relativen Drehwinkel von Nabe und Kupplungsflansch, wie Torsionsfedern.

Diese von ihrem drehweichen Verhalten her an sich sehr vorteilhafte Kupplung hat sich jedoch auf dem Markt nicht durchsetzen können, insbesondere aufgrund ihrer mangelnden Eignung, auf einfache Weise mit einer Aggregatewelle in Axialrichtung verbunden werden zu können. Die Nabe der vorbekannten Kupplung wies eine Fertigbohrung mit Keilnuten auf. Bei der Montage mußte ein Metallbolzen an der Stirnseite des Innenvierkantes (Nabe) angesetzt und durch gleichmäßige Hammerschläge auf die Antriebs- oder Abgangswelle aufgetrieben werden. Außerdem empfahl die Herstellerin dieser Kupplung, die montierte Kupplungshälfte vor Inbetriebnahme mit der Gegenhälfte zu verschrauben, um ungenauen Rundlauf zu vermeiden. Die Demontage der Kupplung war nur mit einem besonderen Abziehwerkzeug möglich.

Hiervon ausgehend liegt der Erfindung folglich die Aufgabe zugrunde, eine Wellenkupplung der im Oberbegriff des Anspruches 1 näher umrissenen Art mit Hilfe einfacher Mittel so zu gestalten, daß ihre Montage mit der Welle des Aggregats, an die die Kupplung anzuschließen ist, besonders einfach durchgeführt werden kann.

Zur Lösung dieser Aufgabe schlägt die Erfindung in erster Linie und im wesentlichen vor, daß der Nabe eine äußere Hülse oder der Kupplungsflansch-Ausnehmung eine innere Hülse zugeordnet ist, an der sich die elastischen Kupplungskörper außen bzw. innen abstützen und daß die Hülse mit der Nabe oder der Kupplungsflansch-Ausnehmung eine drehfeste, axial gleitfähige Passung ausbildet.

Hieraus resultiert, daß die Kupplung werkseitig zumindest hinsichtlich der gummielastischen Kupplungskörper vormontiert werden kann. Deren Einbau ist insbesondere dann, wenn sie unter erheblicher radialer Vorspannung stehen sollen, relativ schwierig. Die radiale Vorspannung der elastischen Kupplungskörper gestattet eine höhere Belastbarkeit des Kupplungssystems und kann deshalb sehr vorteilhaft sein. Die Kupplung läßt sich nunmehr sehr einfach mit der Welle verbinden, an der zuvor die Nabe angebracht ist, insbesondere auch mittels einer zweckmäßigen Verkeilung. Gewissermaßen wirkt hier die Nabe als Adapter für die Kupplung und ist nicht wie beim Stand der Technik bereits integraler Bestandteil der Kupplung, zu dem nunmehr die Hülse zählt.

Vorzugsweise besteht die Hülse aus einem Kunststoff, wie insbesondere Polyamid, welches selbstschmierend ist und daher hervorragend gleitfähige Eigenschaften besitzt. Eine Metall-auf-Metall-Berührung wird dabei umgangen. Die Nabe kann aus gezogenem Material bestehen, was den Vorteil hat, daß sie nach dem ziehen keiner Nachbearbeitung bedarf.

Wenn entsprechend einem anderen Ausgestaltungsvorschlag der Kupplungsflansch aus, insbesondere faserverstärktem, Kunststoff besteht, ist seine Innenhülse vorzugsweise aus Metall gefertigt. Als faserverstärkter Kunststoff kommt insbesondere glasfaser- oder kohlefaserverstärkter Kunststoff in Betracht, je nach den an den Kupplungsflansch gestellten Anforderungen.

Im übrigen versteht sich die Erfindung am besten anhand der nachfolgenden Beschreibung mehrerer in den anliegenden Zeichnungen dargestellter Ausführungsbeispiele. In den Zeichnungen zeigen:
- Fig. 1: Aeinen Halbquerschnitt durch eine Kupplung und eine der Nabe zugeordneten Hülse,
- Fig. 1B: den zu Fig. 1A gehörenden Längsschnitt,
- Fig. 2: eine der Halbquerschnittsdarstellung der Fig. 1A entsprechende Darstellung einer Ausführungsform, bei der die Gleitpassung zwischen Hülse und Nabe als Vielkeilwellenprofil ausgebildet ist,
- Fig. 3: Aeine Fig. 1A entsprechende Darstellung einer Kupplung mit einer der Kupplungsflansch-Ausnehmung zugeordneten Hülse, und
- Fig. 3B: den zu Fig. 3A gehörenden Längsschnitt.

Die insgesamt mit 10 bezeichnete Kupplung besteht aus einem Kupplungsflansch 11, einer Nabe 12 und mehreren strangförmigen, im entspannten Zustand kreiszylindrischen gummielastischen Kupplungskörpern 13.

Bei den gezeigten Ausführungsbeispielen sind die elastischen Körper 13 unter beachtlicher radialer Vorspannung zwischen den Außenseiten der Naben 12 und der Innenseite einer Kupplungsflanschausnehmung 14 eingespannt, jedoch nicht wie beim Stand der Technik unmittelbar, sondern mittelbar unter Einschluß einer inneren oder einer äußeren Hülse.

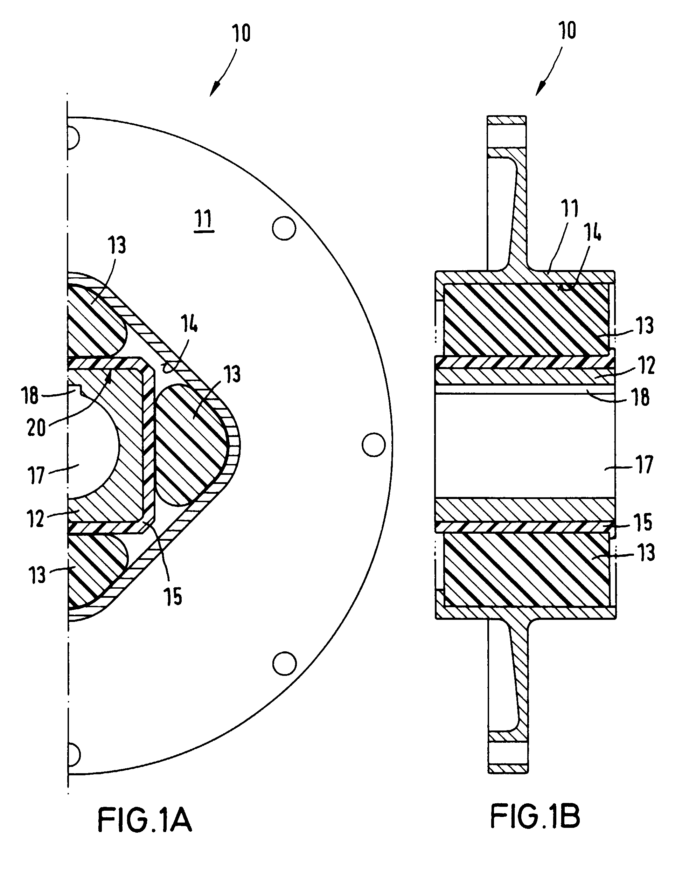

Die Hülse 15 des in Fig. 1A und 1B dargestellten Ausführungsbeispiels besitzt im wesentlichen einen dem Außenumfang der Nabe 12 angepaßten Innenumfang und einen geometrisch ähnlichen Außenumfang. Wesentlich ist, daß zwischen Nabe 12 und Hülse 15 eine einerseits drehfeste, andererseits jedoch axial gut gleitfähige Fassung ausgebildet ist. Deshalb läßt sich die Nabe 12, deren Innenbohrung 17 mit einer Keilnut 18 versehen ist, fest auf einer Welle anbringen, und die Verbindung mit der Kupplung 10 kann auf leichte Weise durch axiales Aufstecken auf die Nabe 12 erfolgen.

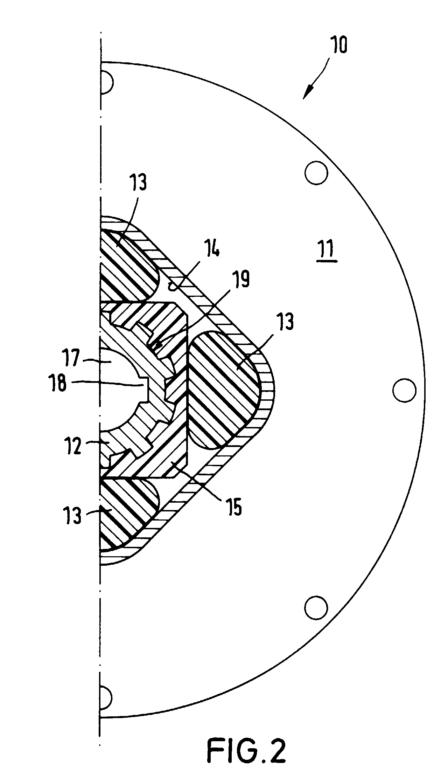

Nach dem gleichen Prinzip ist die in Fig. 2 dargestellte Kupplung ausgelegt. Auch hier weist die Nabe 12 eine Bohrung 17 mit Keilnut 18 auf; ihr Außenumfang ist jedoch nicht als regelmäßiges vierseitiges Polygon gestaltet, sondern als Vielkeilwellenprofil 19. Entsprechend angepaßt ist das Profil der Innenbohrung der Hülse 15. Auch Verzahnungen anderer Geometrie sind möglich, beispielsweise ein Evolventenprofil. Das Außenprofil der Nabe 12 kann gezogen und nicht weiter nachbearbeitet sein.

Die Hülsen 15 bestehen vorzugsweise aus Kunststoff, insbesondere dann, wenn bevorzugtermaßen die Naben 12 aus Stahl hergestellt sind. Hierdurch wird metallische Berührung und dadurch möglicher Passungsrost vermieden. Sollte sich herausstellen, daß die radiale Vorspannung der gummielastischen Körper 13 dazu führt, daß die Wandabschnitte der Hülse 15, an denen sie sich abstützen, störend nach einwärts verformt werden, kann man die Hülsen auch so fertigen, daß ihre entsprechenden Wandabschnitte 20 nach außen vorgeformt sind und im Einbauzustand infolge der radialen Krafteinwirkung dann im wesentlichen eingeebnet werden.

Beim Ausführungsbeispiel der Fig. 2 ist die Hülse 16 - wiederum im axialen Gleitsitz - der Kupplungsflansch-Ausnehmung 14 zugeordnet. Hier wird also die vormontierte, aus Nabe 12, elastischen Kupplungskörpern 13 und Hülse 16 bestehende Anordnung fest auf das Ende der nicht dargestellten Welle angebracht, während der Kupplungsflansch 11 axial auf die Hiilse 16 aufschiebbar ist. Sowohl die Montage als auch die Demontage dieser Kupplung ist also ebenso einfach und problemlos durchzuführen wie die der beiden anderen Ausführungsbeispiele.

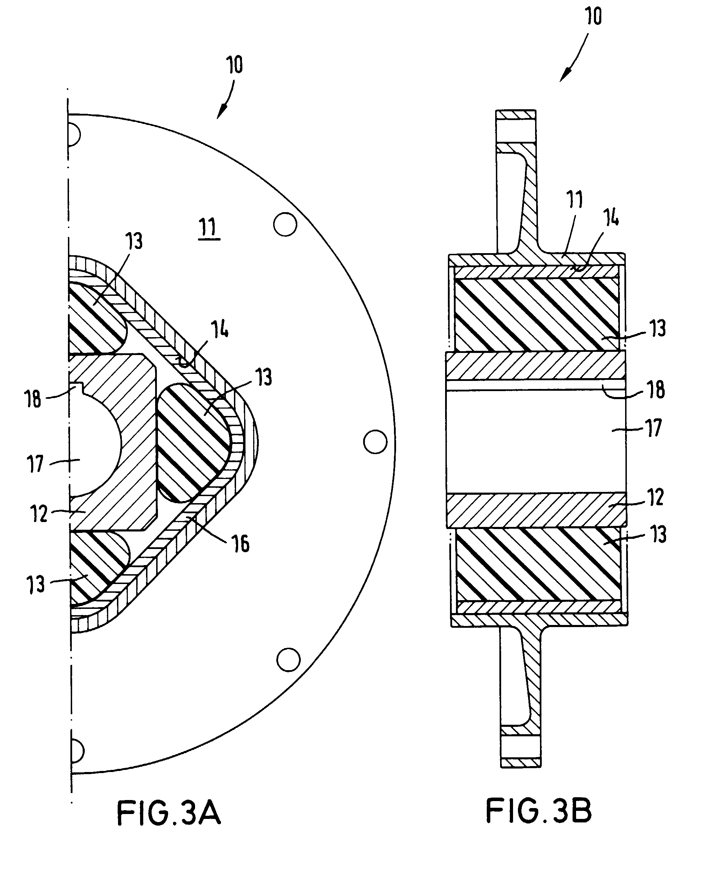

Ausgehend vom Stand der Technik ist nach den Ausführungsbeispielen nach den Fig. 1A, 1B und 2 die bisher einstückige Nabe praktisch in zwei, gleitverschieblich in Axialrichtung miteinander steckbare Nabenteilen zergliedert bzw. aufgeteilt. Bei der Ausführungsform nach Fig. 3A und 3B besteht der "Käfig" für die gummielastischen Körper 13 nicht unmittelbar aus der Laibung der KupplungsflanschAusnehmung 14, sondern aus der besonderen, axial in sie einschiebbaren Hülse 16.

Im Sinne der Erfindung bedeutet "polygonaler Umriß" von Kupplungsflansch-Ausnehmung und Nabe einerseits, daß die Kupplungsflansch-Ausnehmung 14 geeignete Eckbereiche aufweisen soll zur Aufnahme der elastischen Kupplungskörper 13, und daß bei der Nabe 12 Gegenstützflächen vorhanden sind, die hier von den Polyponseiten 20 gebildet werden. Diese müssen aber nicht, wie in Ausführungsbeispielen dargestellt, als gerade Flächen ausgebildet sein; sie können durchaus auch zu den gummielastischen Körpern hin konkav gekrümmt sein.

Der "Umfangsversatz" zwischen Nabe 12 bzw. darauf sitzender Hülse 15 und Kupplungsflansch-Ausnehmung 14 bzw. darin einsteckender Hülse 16 bedeutet im Zusammenhang mit der Erfindung, daß eine Anlagefläche an der Nabe 12 oder der ihr zugeordneten Hülse 15 einem Eckbereich der Kupplungsflansch-Ausnehmung oder der zu dieser gehörenden Innenhülse 16 zugeordnet ist. Wichtig ist, daß die in gewisser Weise zwar als Rollkörper wirkenden gummielastischen Kupplungskörper 13 sich nicht in Umfangsrichtung fortbewegen dürfen, wenn die Kupplung 10 unter Drehmoment belastet wird.

Besteht, was allein schon aus Gewichtsgründen vorteilhaft sein kann, der Kupplungsflansch 10 aus einem Kunststoff, z.B. aus GFK, kann seine Innenhülse 16 aus Metall oder aus Kunststoff bestehen.

## Patentansprüche

1. Wellenkupplung, im wesentlichen bestehend aus einem antriebsseitig anzuordnenden Kupplungsflansch (11) und einer abtriebsseitig anzuordnenden, axial in eine zentrale Ausnehmung (14) des Kupplungsflansches (11) eingreifenden, zum Anschluß an eine Welle bestimmten Nabe (12) sowie einer Anzahl von gummielastischen, insbesondere strangförmigen Kupplungskörpern (13), wobei die zentrale Ausnehmung (14) des Kupplungsflansches (11) innen und die Nabe (12) außen jeweils einen im wesentlichen polygonalen Umriß aufweisen, in Umfangsrichtung symmetrisch versetzt zueinander berührungslos ineinandergreifen, und die elastischen Kupplungskörper (13) in die durch den Umfangsversatz zwischen Nabe (12) und Kupplungsflansch (11) gebildeten Freiräume einge- setzt sind, dadurch gekennzeichnet, daß der Nabe (12) eine äußere Hülse (15) oder der Kupplungsflansch-Ausnehmung (14) eine innere Hülse (16) zugeordnet ist, an der sich die elastischen Kupplungskörper (13) außen bzw. innen abstützen und daß die Hülse (15; 16) mit der Nabe (12) oder der Kupplungsflansch-Ausnehmung (14) eine drehfeste, axial gleitfähige Passung ausbildet.

2. Kupplung nach Anspruch 1, dadurch gekennzeichnet, daß die Hülse (15; 16) aus einem Kunststoff wie insbesondere Polyamid besteht.

3. Kupplung nach Anspruch 1 oder 2, dadurch gekennzeichnet, daß die Nabe (12) und/oder die Hülse (15; 16) aus gezogenem Material besteht.

4. Kupplung nach Anspruch 1, dadurch gekennzeichnet, daß der Kupplungsflansch (11) aus, insbesondere faserverstärktem, Kunststoff und seine Innenhülse (16) aus Metall besteht.

5. Kupplung nach Anspruch 1 oder einem der folgenden, dadurch gekennzeichnet, daß die zur Anlage der elastischen Kupplungskörper bestimmten Polygonseiten (20) der der Nabe (12) zugeordneten Hülse (15) nach auswärts vorverformt und unter Einwirkung der radialen Vorspannkräfte der Kupplungskörper (13) im wesentlichen eingeebnet sind.

## Claims

1. Shaft coupling, essentially consisting of a coupling flange (11) disposed at the drive end and a hub (12), disposed at the driven end, which is intended for connection to a shaft and engages axially in a central recess (14) of the coupling flange (11), and a number of flexible, particularly rope-type, coupling elements (13), the central recess (14) of the coupling flange (11) and the hub (12) each having, on the inside and outside, respectively, an essentially polygonal profile and engaging without contact, being symmetrically displaced relative to each other in the circumferential direction, and the flexible coupling elements (13) being inserted in the clear spaces formed by the circumferential offset between the hub (12) and the coupling flange (11), characterized in that the hub (12) is provided with an outer sleeve (15) or the coupling flange recess (14) is provided with an inner sleeve (16) against the outside and inside of which, respectively, the flexible coupling elements (13) are supported and in that the sleeve (15; 16) forms a rotationally rigid fit, capable of sliding axially, with the hub (12) or with the coupling flange recess (14).

2. Coupling according to Claim 1, characterized in that the sleeve (15; 16) is made from a plastics material such as, in particular, polyamide.

3. Coupling according to Claim 1 or 2, characterized in that the hub (12) and/or the sleeve (15; 16) is made from drawn material.

4. Coupling according to Claim 1, characterized in that the coupling flange (11) is made from a plastics material, particularly a fibre-reinforced plastics material, and its inner sleeve (16) is made from metal.

5. Coupling according to Claim 1 or any one of the subsequent claims, characterized in that the polygon sides (20) of the sleeve (15) assigned to the hub (12), which are intended to act as bearing faces for the elastic coupling elements, are preformed outwards and are essentially levelled by the action of the radial prestress forces of the coupling elements (13).

## Revendications

1. Accouplement d'arbres, constitué pour l'essentiel par une bride d'accouplement (11) à disposer du côté de l'entrée et par un moyeu (12) à disposer du côté de la sortie qui pénètre axialement dans un évidement central (14) de la bride d'accouplement (11) et qui est destiné à être raccordé à un arbre, ainsi que par une pluralité de corps d'accouplement élastiques comme du caoutchouc (13), en particulier en forme de bourrelets, cependant qu'à chaque fois, l'évidement central (14) de la bride d'accouplement (11) présente intérieurement un contour pour l'essentiel polygonal et que le moyeu (12) le présente extérieurement, que cet évidement et ce moyeu s'interpénètrent sans contact en étant décalés symétriquement dans la direction périphérique, et que les corps d'accouplement élastiques (13) sont insérés dans les espaces libres qui sont formés par le décalage dans le sens périphérique entre le moyeu (12) et la bride d'accouplement (11), caractérisé par le fait que l'on associe au moyeu (12) un manchon extérieur (15) ou à l'évidement (14) de la bride d'accouplement un manchon intérieur (16), manchons sur lesquels les corps d'accouplement élastiques (13) s'appuient extérieurement ou intérieurement, respectivement, et par le fait que le manchon (15 ; 16) constitue avec le moyeu (12) ou avec l'évidement (14) de la bride d'accouplement un ajustement qui est rigide en rotation, mais qui peut glisser axialement.

2. Accouplement d'arbres selon la revendication 1, caractérisé par le fait que le manchon (15 ; 16) est constitué par une matière plastique, comme en particulier un polyamide.

3. Accouplement d'arbres selon la revendication 1 ou 2, caractérisé par le fait que le moyeu (12) et/ou le manchon (15 ; 16) est constitué par un matériau filé.

4. Accouplement d'arbres selon la revendication 1, caractérisé par le fait que la bride d'accouplement (11) est constituée par de la matière plastique, en particulier renforcée par des fibres, et que son manchon intérieur (16) est en métal.

5. Accouplement d'arbres selon la revendication 1 ou l'une des suivantes, caractérisé par le fait que les côtés (20) des polygones destinés à l'appui des corps d'accouplement élastiques du manchon (15) qui est associé au moyeu (12) sont déformés au préalable vers l'extérieur, et qu'ils sont aplanis pour l'essentiel sous l'effet des forces radiales de compression préalable des corps d'accouplement (13).
